# EUROPEAN PATENT APPLICATION

(11) **EP 4 550 633 A1**
(43) Date of publication of application: **07.05.2025**
(21) Application number: 23306918.6
(22) Date of filing: 06.11.2023
(51) Int. Cl.: H02K 1/32, H02K 9/197, H02K 17/16, H02K 9/04

(54) **AIR-COOLED ROTOR FOR AN INDUCTION MOTOR**

(71) Applicant: ALSTOM Holdings, 93400 Saint-Ouen-sur-Seine (FR)
(72) Inventor: SCHERER, Michel, 25320 GRANDFONTAINE (FR); BERKANI, Mohamed-Said, 25000 BESANCON (FR); SOUGH, Mohamed-Laid, 25320 TORPES (FR); FAKAM TCHAKOUE, Mathias, 25410 ROUTELLE (FR)
(74) Representative: Plasseraud IP

(57) **Abstract**

The present invention relates to a rotor (12) for an induction motor (10), said rotor comprising : a rotating shaft (22) extending along a main axis (20), said shaft comprising a main body (30) axially extending between a first and a second end; a rotor assembly (24) fixed to and extending around the main body of the shaft; and a ventilation channel (40).

The ventilation channel is a tubular cavity extending through the main body of the shaft, between a first (42) and a second (44) opening, situated respectively on the first and on the second ends of said main body, a first distance (46) between the main axis and the first opening (42) being inferior to a second distance (48) between the main axis and the second opening (44).

## Description

The invention relates to a rotor for an induction motor, said rotor comprising : a rotating shaft extending along a main axis, said shaft comprising a main body axially extending between a first and a second ends ; a rotor assembly fixed to and extending around the main body of the shaft ; and at least one ventilation channel.

Typically, induction motors used in the railway industry are cooled by a fan mounted on the rotor and drawing air into said rotor, as described in document WO2008/022108. Such a configuration implies a high noise level, especially when the motor frame comprises vents for air circulation between the inside and the outside of the motor.

Other motor types comprise a closed frame and alternative cooling devices, such as water cooling devices so as, as an example, the 6 HGA 1755 Y Alstom traction motor. Such motors ensure low noise levels but their manufacturing and use is more expensive than the motors with air cooling devices.

The present invention aims to provide a motor allowing the air cooling of the rotor without the presence of a fan.

For this purpose, the invention relates to a rotor of the aforementioned type, wherein the at least one ventilation channel is a tubular cavity extending through the main body of the shaft, between a first and a second openings, situated respectively on the first and on the second ends of said main body, a first distance between the main axis and the first opening being inferior to a second distance between the main axis and the second opening.

According to preferred embodiments, the rotor may include one or more of the following features, considered alone or in any technically possible combination:
- the at least one ventilation channel is substantially rectilinear and extends along a channel axis, said channel axis being coplanar with the main axis and forming a non-zero angle with said main axis ;
- the angle is comprised between 1° and 20°, preferably comprised between 5° and 10° ;
- the rotor comprises a plurality of ventilation channels, each ventilation channel being a tubular cavity extending through the main body of the shaft between the first and the second ends of said main body, the ventilation channels being arranged around the main axis ;
- each ventilation channel is substantially rectilinear and extends along a channel axis, each channel axis being coplanar with the main axis and forming a non-zero angle with said main axis ;
- each of the first and second ends of the main body comprise a front face substantially perpendicular to the main axis, the first and second openings being situated on the front face, respectively, of said first and of said second ends ;
- the rotor shaft also comprises a first and a second connecting parts, axially protruding from the front face, respectively, of the first and of the second ends of the main body ;
- the rotor assembly comprises a rotor core, inserted around the main body of the rotor shaft and a rotor cage encasing the rotor core.

The invention also relates to an induction motor comprising : a rotor as described above ; a stator coupled to the rotor ; and a motor frame fixed to the stator, the rotor being able to rotate relative to the motor frame around the main axis.

According to a preferred embodiment, the motor frame comprises air vents allowing passage for an air flux formed through the at least one ventilation channel by the rotation of the rotor.

The invention also relates to a railway vehicle comprising an induction motor as described above.

The invention will be easier to understand in view of the following description, provided solely as an example, and with reference to the appended drawings, wherein :
- Figure 1 is a schematic, axial cross-sectional view of an induction motor comprising a rotor according to an embodiment of the invention ; and
- Figure 2 is a front view of the rotor of Figure 1.

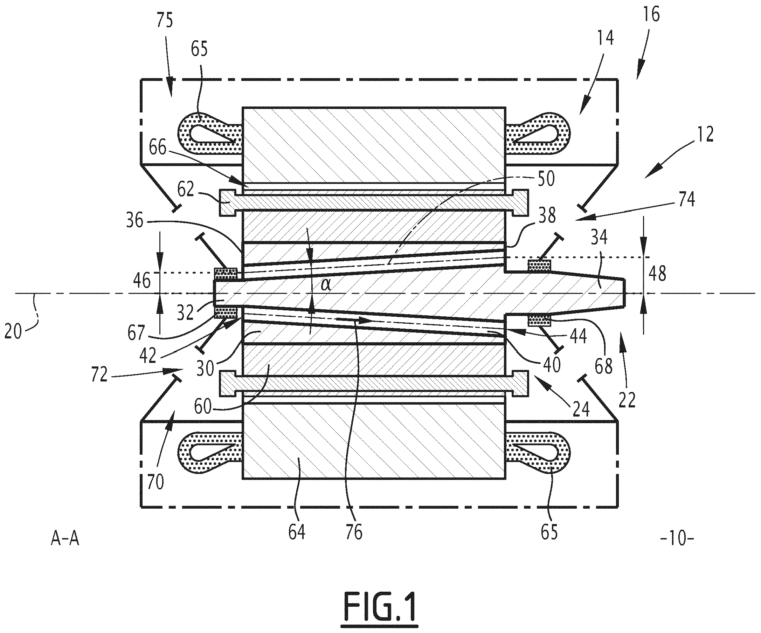

Figure 1 is a schematic view of an induction motor 10 according to an embodiment of the invention. Preferably, the motor 10 is a traction motor of a railway vehicle (not shown).

As shown on Figure 1, the motor 10 comprises a rotor 12, a stator 14 and a motor frame 16.

The rotor 12 extends along a main axis 20 and comprises a rotor shaft 22 and a rotor assembly 24.

The rotor shaft 22 comprises a main body 30 and a first 32 and a second 34 connecting portions, preferably made in one piece. The main body 30 is axially disposed between the first 32 and second 34 connecting portions.

The main body 30 has a cylindrical shape and radially projects from the first 32 and second 34 connecting portions. More precisely, the main body 30 comprises a first 36 and a second 38 front faces, substantially plane and perpendicular to the main axis 20. The first 32 and second 34 connecting portions axially protrude, respectively, from the first 36 and from the second 38 front faces.

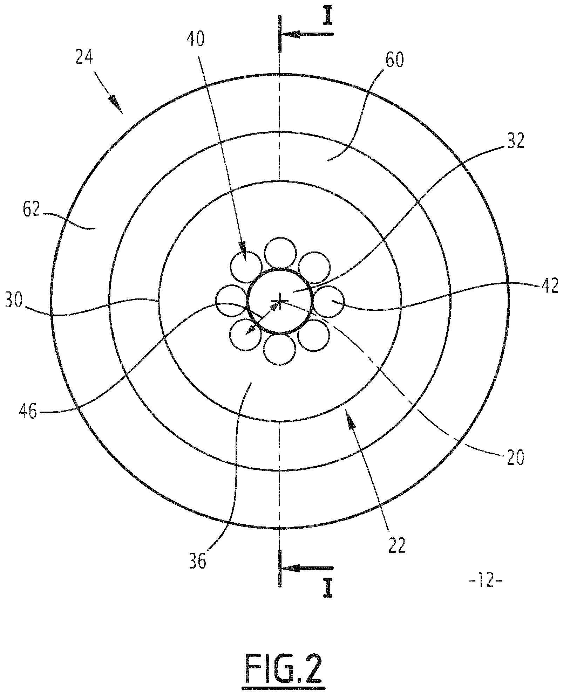

In the embodiment of Figures 1 and 2, a junction of each of the first 32 and second 34 connecting portions with the main body 30 is circular, a diameter of said junction being smaller for the first 32 than for the second 34 connecting portion.

Each of the first 32 and second 34 connecting portions of the rotor shaft 22 is designed for being connected to shaft portions (not shown), so as to form a motor shaft. Said motor shaft is able to rotate relative to the frame 16 around the main axis 20, similarly to the motor described in document WO2008/022108.

The rotor 12 also comprises at least one ventilation channel 40 for cooling said rotor during its rotation.

The ventilation channel 40 is a tubular cavity extending through the main body 30 of the rotor shaft 22. More precisely, the ventilation channel 40 extends between a first 42 and a second 44 openings, situated respectively on the first 36 and on the second 38 front faces of the main body 30.

A first radial distance 46 between the main axis 20 and the first opening 42 is smaller than a second radial distance 48 between the main axis 20 and the second opening 44.

Preferably, the ventilation channel 40 is substantially rectilinear and extends along a channel axis 50. The channel axis 50 is coplanar with the main axis 20 and forms a non-zero angle α with said main axis 20. More preferably, the angle α is comprised between 1° and 20°, even more preferably comprised between 5° and 10°.

Preferably, the ventilation channel 40 has a substantially constant width between the first 42 and second 44 openings. Preferably, the ventilation channel 40 has a substantially circular section and each of the first 42 and second 44 openings is substantially circular or oval.

Preferably, the rotor 12 comprises a plurality of ventilation channels 40, arranged around the main axis 20. More preferably, a number of ventilation channels 40 is comprised between four and twelve.

In the embodiment of Figures 1 and 2, the rotor 12 comprises eight ventilation channels 40, arranged regularly around the main axis 20. More precisely, the ventilation channels 40 are the image of each other by rotational symmetry around the main axis.

As shown on Figure 2, the first openings 42 of the ventilation channels 40 are arranged in a circle on the first front face 36 of the main body 30, around the first connecting portion 32. A radius of the circle formed by the first openings 42 is the first radial distance 46. The second openings 44 are arranged similarly on the second front face 38, on a circle whose radius is the second radial distance 48.

The rotor assembly 24 is fixed to and extends around the main body 30 of the rotor shaft 22. In an embodiment of the invention, the rotor assembly 24 comprises a rotor core 60 and a rotor cage 62. Preferably, the rotor core 60 is formed by metal laminations inserted around the cylindrical surface of the main body 30 and piled along the main axis 20. The laminations of the rotor core 60 are assembled by the rotor cage 62 so as to form a squirrel cage rotor.

The stator 14 comprises a stator core 64 of tubular shape, coaxial with the main axis 20. The stator core 64 defines a cylindrical space 66 receiving the rotor assembly 24.

In an embodiment of the invention, the stator 14 also comprises winding coils 65 inserted in the stator core 64, similarly as the stator described in document WO2008/022108.

The motor frame 16 is fixed to the stator 14. Preferably, the motor frame comprises bearings 67, 68 assembled to the rotor shaft 22 and allowing the rotor 12 to rotate relative to the motor frame 16 around the main axis 20, similarly as the motor described in document WO2008/022108.

The motor frame 16 defines a first inner volume 70, receiving the rotor 12. In a preferred embodiment of the invention, the motor frame comprises air vents 72, 74 opening on the first inner volume 70. More preferably, the motor frame comprises first 72 and second 74 air vents, opening respectively on the first 36 and on the second 38 front faces of the main body 30 of the rotor shaft 22.

In the shown embodiment, the motor 10 also comprises an inner housing encasing the stator 14 and forming a second inner volume 75 of the motor frame 16, the first 70 and second 75 inner volumes being separated from each other. According to said embodiment, the rotor 12 and stator 14 are thermally and/or hydraulically isolated from each other.

In an embodiment, the motor 10 also comprises a stator cooling device (not shown). For example, the motor 10 comprises a water cooling device for the stator.

A method for implementing the motor 10 will now be described. During a rotation of the rotor 12, an air pressure near the second openings 44 is lower than an air pressure near the first openings 42 due to the respective distances between said openings and the rotation main axis 20. Therefore, an air flow 76 is generated in the ventilation channels 40 by the rotation of the rotor. The air flow 76 ensures a cooling of the rotor 12 during working.

In the embodiment wherein the motor 10 comprises air vents 72, 74, the air flow 76 allows fresh outer air to enter in the first inner volume 70.

Therefore, the inclined ventilation channels 40 of the rotor 12 allow an efficient ventilation of said rotor and of the first inner volume 70 of the motor, without adding a fan to the rotor.

The absence of a fan on the rotor 12 diminishes the noise level of the working motor 10, even in the presence of air vents 72, 74. In the same manner, the necessary volume for a fan in the motor frame 16 is spared, improving the compactness of the motor.

## Claims

1. A rotor (12) for an induction motor (10), said rotor comprising :
- a rotating rotor shaft (22) extending along a main axis (20), said shaft comprising a main body (30) axially extending between a first and a second ends ;
- a rotor assembly (24) fixed to and extending around the main body of the shaft ; and
- at least one ventilation channel (40) ;
**characterized in that** the at least one ventilation channel (40) is a tubular cavity extending through the main body (30) of the rotor shaft (22), between a first (42) and a second (44) openings, situated respectively on the first and on the second ends of said main body, a first distance (46) between the main axis and the first opening (42) being inferior to a second distance (48) between the main axis and the second opening (44).

2. A rotor according to claim 1, wherein the at least one ventilation channel is substantially rectilinear and extends along a channel axis (50), said channel axis being coplanar with the main axis (20) and forming a non-zero angle (α) with said main axis.

3. A rotor according to claim 2, wherein the angle (α) is comprised between 1° and 20°, preferably comprised between 5° and 10°.

4. A rotor according to one of the preceding claims, comprising a plurality of ventilation channels (40), each ventilation channel being a tubular cavity extending through the main body of the shaft between the first and the second ends of said main body (30), the ventilation channels being arranged around the main axis (20).

5. A rotor according to claim 4 combined with claim 2 or 3, wherein each ventilation channel is substantially rectilinear and extends along a channel axis (50), each channel axis being coplanar with the main axis and forming a non-zero angle (α) with said main axis.

6. A rotor according to one of the preceding claims, wherein each of the first and second ends of the main body comprise a front face (36, 38) substantially perpendicular to the main axis (20), the first (42) and second (44) openings being situated on the front face, respectively, of said first and of said second ends.

7. A rotor according to claim 6, wherein the rotor shaft (22) also comprises a first (32) and a second (34) connecting parts, axially protruding from the front face (36, 38), respectively, of the first and of the second ends of the main body.

8. A rotor according to one of the preceding claims, wherein the rotor assembly (24) comprises a rotor core (60), inserted around the main body (30) of the rotor shaft (22) and a rotor cage (62) encasing the rotor core.

9. An induction motor (10) comprising :
- a rotor (12) according to one of the previous claims ;
- a stator (14) coupled to the rotor ; and
- a motor frame (16) fixed to the stator, the rotor being able to rotate relative to the motor frame around the main axis (20).

10. An induction motor according to claim 9, wherein the motor frame (16) comprises air vents (72, 74) allowing passage for an air flux (76) formed through the at least one ventilation channel (40) by the rotation of the rotor (12).

11. A railway vehicle comprising an induction motor (10) according to claim 9 or 10.
